# EUROPÄISCHE PATENTSCHRIFT

(11) **EP 2 223 408 B1**
(45) Veröffentlichungstag und Bekanntmachung des Hinweises auf die Patenterteilung: **25.01.2017**
(21) Anmeldenummer: 08858930.4
(22) Anmeldetag: 17.11.2008
(51) Int. Cl.: H02J 5/00, H02M 7/48, H02M 1/42

(54) **SYSTEM ZUR BERÜHRUNGSLOSEN ENERGIEÜBERTRAGUNG UND VERFAHREN**
SYSTEM FOR CONTACTLESS ENERGY TRANSMISSION AND CORRESPONDING METHOD
SYSTÈME DE TRANSFERT D'ÉNERGIE SANS CONTACT ET PROCÉDÉ CORRESPONDANT

(30) Priorität: 12.12.2007 DE 102007060283
(43) Veröffentlichungstag der Anmeldung: 01.09.2010
(73) Patentinhaber: SEW-EURODRIVE GmbH & Co. KG, 76646 Bruchsal (DE)
(72) Erfinder: PODBIELSKI, Leobald, 76199 Karlsruhe (DE); SCHILLING, Reiner, 76703 Kraichtal (DE); BECKER, Günter, 76684 Östringen (DE)
(86) Internationale Anmeldenummer: PCT/EP2008/009710
(87) Internationale Veröffentlichungsnummer: WO 2009/074207

(56) Entgegenhaltungen:
- DE-A1- 4 446 779
- DE-A1-102007 014 712
- US-A- 5 701 243
- US-A1- 2004 218 406

## Beschreibung

Die Erfindung betrifft ein System zur berührungslosen Energieübertragung und ein Verfahren.

Es ist bekannt, von einem stationären Teil eines Systems, umfassend zumindest einen langgestreckten Primärleiter, an einen bewegbaren Teil des Systems, umfassend eine Sekundärwicklung, Energie berührungslos an einen Verbraucher zu übertragen.

Ein standesgemäßes System ist aus der Veröffentlichung DE 44 46 779 A1 bekannt. Die Druckschrift US 5,701,243 offenbart einen hochleistungsfähigen Hochsetzsteller mit einem Serienschwingkreis.

Der Erfindung liegt daher die Aufgabe zugrunde, ein System zur berührungslosen Energieübertragung weiterzubilden, wobei dem Verbraucher eine hohe Spannung zur Verfügung gestellt werden soll.

Erfindungsgemäß wird die Aufgabe bei dem System nach den in Anspruch 1 und bei dem Verfahren nach den in Anspruch 10 angegebenen Merkmalen gelöst.

Wesentliche Merkmale der Erfindung bei dem System sind, dass es zur berührungslosen Energieübertragung von einem stationären Teil des Systems an einen anderen Teil des Systems vorgesehen ist, insbesondere bewegbar angeordneten Teil des Systems, wobei ein stationär verlegter Primärleiter vorgesehen ist, an den eine oder mehrere vom Teil umfasste Sekundärwicklungen induktiv gekoppelt vorgesehen ist,
wobei die Sekundärwicklungen mit einem oder mehreren Kondensatoren derart in Reihe geschaltet sind, dass die Resonanzfrequenz des so gebildeten Serienschwingkreises im Wesentlichen der Frequenz eines in den Primärleiter eingeprägten Wechselstromes gleichen,
wobei die am Serienschwingkreis auftretendes Spannung einem Gleichrichter zugeführt wird, an dessen Ausgangsseite ein als Kurzschließer betätigbarer Schalter vorgesehen ist.
wobei der nicht durch den Schalter abgeführte Strom über eine Freilaufdiode einem Glättungskondensator zugeführt wird,
wobei die am Glättungskondensator auftretende Spannung einem Verbraucher zur Verfügung gestellt wird.

Von Vorteil ist dabei, dass dem sekundärseitigen Verbraucher eine höhere Spannung zur Verfügung stellbar ist als die am sekundärseitigen Serienresonanzkreis auftretende Spitzenspannung. Hierzu ist aber keine Spannungsdopplerschaltung notwendig. Außerdem ist keine zusätzliche Induktivität notwendig zur Realisierung eines Boostkonverters. Es wird keine dem Gleichrichter nachgeschaltete Induktivität benötigt, sondern nur ein dem Gleichrichters nachgeordneter Schalter, der zusammenwirkt mit dem dem Gleichrichter vorgeschalteten Serienresonanzkreis und dessen Induktivitäten und Kapazitäten. Der beim Öffnen des Schalters abzuführende Freilaufstrom wird zur Versorgung des Glättungskondensators und des mit diesem verbundenen Verbrauchers verwendet. Außerdem ist mittels der Erfindung eine genaue und schnelle Regelung der Ausgangsspannung U_z ermöglicht.

Bei einer vorteilhaften Ausgestaltung ist ein Mittel zur Erfassung der am Glättungskondensator auftretenden Spannung vorgesehen, wobei das Mittel mit einem Regler verbunden ist, der als Stellgröße das Ansteuersignal des Schalters erzeugt. Von Vorteil ist dabei, dass mit dem Regler die Ist-Spannung auf den gewünschten Sollwert hin regelbar ist. Somit sind Spannungseinbrüche bei schwankender Leistungsentnahme durch den Verbraucher ausregelbar. Dasselbe gilt für Schwankungen des Kopplungsgrades zwischen Primärleiter und Sekundärwicklung.

Bei einer vorteilhaften Ausgestaltung ist das Ansteuersignal ein pulsweitenmoduliertes Signal vorgesehen und/oder der Schalter pulsweitenmoduliert betätigbar. Von Vorteil ist dabei, dass eine skalare Stellgröße verwendbar ist und somit ein sehr einfach strukturierter und schnell wirksamer Regler verwendbar ist. Außerdem ist mittels der Pulsweitenmodulation ein unbegrenzter Anstieg der am Glättungskondensator anliegenden Spannung verhinderbar.

Bei einer vorteilhaften Ausgestaltung wird dem Regler eine Sollspannung zugeführt oder ist in ihm hinterlegt. Von Vorteil ist dabei, dass auf eine im Stellbereich liegende beliebige Sollspannung hinregelbar ist.

Bei einer vorteilhaften Ausgestaltung ist die Pulsweitenmodulationsfrequenz kleiner als die Frequenz des in den Primärleiter eingeprägten Stromes, Von Vorteil ist dabei, dass der Schalter erst nach Aufschwingen der Resonanzspannung geöffnet wird.

Bei einer vorteilhaften Ausgestaltung ist die Pulsweitenmodulationsfrequenz synchronisiert auf die Frequenz des in den Primärleiter eingeprägten Stromes. Von Vorteil ist dabei, dass keine unkontrollierbaren Oberschwingungen erzeugt werden. Außerdem ist stets ein Öffnen im Nullspannungsdurchgangsbereich ermöglicht.

Bei einer vorteilhaften Ausgestaltung sind die Sekundärwicklungen um einen gemeinsamen Kern gewickelt und/oder geführt. Von Vorteil ist dabei, dass eine einfache Fertigung und ein kompakter Aufbau ermöglicht ist.

Bei einer vorteilhaften Ausgestaltung ist der Schalter ein elektronischer Halbleiterschalter, insbesondere Transistor, wie IGBT oder MOSFET. Von Vorteil ist dabei, dass ein kostengünstiges Schaltelement mit geringem Verschleiß verwendbar ist, der auch mit einer hohen Pulsweitenmodulationsfrequenz ansteuerbar ist.

Bei einer vorteilhaften Ausgestaltung sind die Sekundärwicklungen und die Kondensatoren von einem gemeinsamen Gehäuse umgeben. Von Vorteil ist dabei, dass ein kompakter Aufbau und eine wirksame Abschirmung ermöglicht ist.

Wichtige Merkmale bei dem Verfahren sind, dass es zum Betreiben eines Systems zur berührungslosen Energieübertragung von einem primärseitigen Teil des Systems an einen Teil des Systems vorgesehen ist, insbesondere bewegbar angeordneten Teil des Systems,
wobei ein stationär verlegter Primärleiter vorgesehen ist, an den eine oder mehrere vom Teil umfasste Sekundärwicklungen induktiv gekoppelt vorgesehen ist,
wobei die Sekundärwicklungen mit einem oder mehreren Kondensatoren derart in Reihe geschaltet sind, dass die Resonanzfrequenz des so gebildeten Serienschwingkreises im Wesentlichen der Frequenz eines in den Primärleiter eingeprägten Wechselstromes gleichen,
wobei die am Serienschwingkreis auftretendes Spannung einem Gleichrichter zugeführt wird, an dessen Ausgangsseite ein als Kurzschließer betätigbarer Schalter vorgesehen ist,
wobei der Schalter pulsweitenmoduliert angesteuert wird,
wobei der nicht durch den Schalter abgeführte Strom über eine Freilaufdiode einem Glättungskondensator zugeführt wird,
wobei die am Glättungskondensator auftretende Spannung einem Verbraucher zur Verfügung gestellt wird.

Von Vorteil ist dabei, dass ein sehr genaues und schnelles Einstellen der Spannung ermöglicht ist. Außerdem ist der Regler entweder als linearer Regler, wie P-Regler, PI-Regler oder PID-Regler, ausführbar oder als nichtlinearer Regler, der Übertragungsfunktionen des Systems berücksichtigt.

Bei einer vorteilhaften Ausgestaltung wird die am Glättungskondensator anliegende Spannung erfasst und als Istgröße auf eine Sollspannung hin geregelt, indem als Stellgröße die Pulsweite des Ansteuersignals für den Schalter verwendet wird. Von Vorteil ist dabei, dass eine skalare Stellgröße verwendbar ist und somit eine einfache Regelung realisierbar ist

Bei einer vorteilhaften Ausgestaltung wird die Pulsweitenmodulationsfrequenz synchronisiert zu der Frequenz des in den Primärleiter eingeprägten Stromes. Von Vorteil ist dabei, dass ein Öffnen des Schalters im Nulldurchgang oder Bereich des Nulldurchgangs der Spannung ermöglicht ist.

Weitere Vorteile ergeben sich aus den Unteransprüchen.

### Bezugszeichenliste

- 1: Regler
- C: Glättungskondensator
- D: Diode
- S: Schalter
- U_Soll: Sollspannung
- U_z = U_ist: Ausgangsspannung als Istwert
- U_r: Spannung am Serienschwingkreis

Die Erfindung wird nun anhand von Abbildungen näher erläutert:

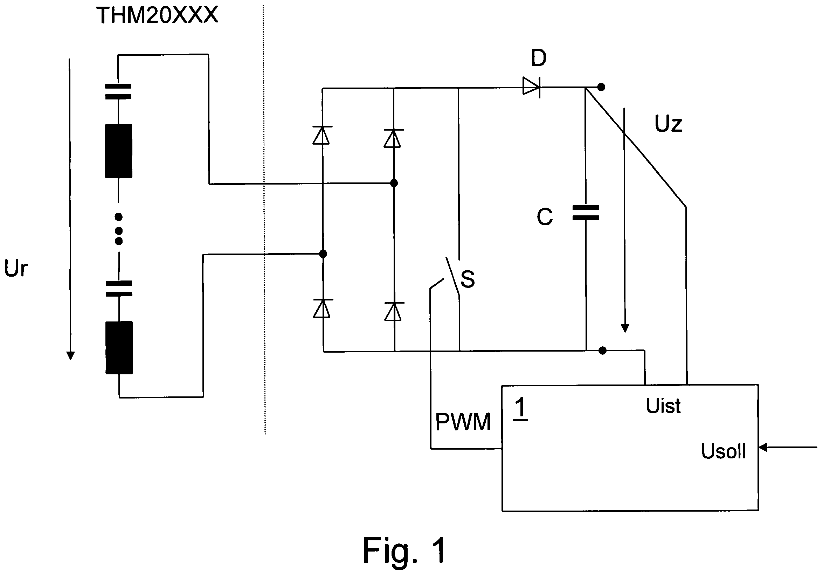

In der Figur 1 ist ein Sekundärteil einer erfindungsgemäßen Vorrichtung schematisch skizziert.

In der Anlage ist ein langgestreckter Primärleiter verlegt, entlang dessen der Sekundärteil bewegbar angeordnet ist, wobei der Sekundärteil eine Sekundärspule umfasst, die aus einer geteilten Wicklung, also mehreren Teilwicklungen mit jeweiligem Anschluss besteht.

Jeder Teilwicklung ist ein Kondensator nachgeschaltet zur Bildung eines Serienschwingkreises. Der gesamte sekundärseitige Schwingkreis ist aus einer Serienschaltung der Serienschwingkreise gebildet. Auf diese Weise ist die an den Teilwicklungen auftretende Spitzenspannung reduziert.

Die am sekundärseitigen Serienschwingkreis auftretende Spannung U_r wird einem Gleichrichter zugeführt, an dessen gleichspannungeseitigem Ausgang ein Kurzschließer S vorgesehen ist, der pulsweitenmoduliert ansteuerbar ist. Über eine Diode D wird der nicht durch den Kurzschließen abgeleitete Ausgangsstrom des Gleichrichters einem Glättungskondensator C zugeführt, der die einem Verbraucher zur Verfügung gestellte Spannung U_z glättet.

Bei geschlossenem Schalter S wird der Reihenresonanzkreis, also Serienschwingkreis, über den Gleichrichter kurzgeschlossen und schwingt auf. Dadurch wird im Resonanzkreis Energie in den den Teilwicklungen zugeordneten Induktivitäten und den jeweils in Reihe geschalteten Kondensatoren Energie gespeichert.

Wird der Schalter geöffnet, so fließt ein Freilaufstrom über die Diode D, die als Freilaufdiode hierzu vorgesehen ist und fließt somit dem Verbraucher und/oder dem Glättungskondensator C zu, bis die Resonanzspannung U_r kleiner als die am Glättungskondensator anliegende Spannung U_z geworden ist.

Der Verbraucher umfasst beispielsweise einen elektrischen Antrieb, insbesondere umfassend einen umrichtergespeisten Elektromotor. Der Antrieb ist als Antrieb des Wagens vorsehbar.

Die sekundärseitige Serienschaltung ist von einem einzigen Gehäuse umgeben.

Sekundärspule und Primärleiter sind induktiv gekoppelt, insbesondere schwach. In den Primärleiter wird ein mittelfrequenter Strom eingeprägt. Vorzugsweise beträgt dessen Frequenz zwischen 10 und 100 oder 200 kHz. Die Resonanzfrequenz des sekundärseitigen Serienschwingkreises stimmt im Wesentlichen mit der Wechselspannungsfrequenz des eingeprägten Stromes überein. Auf diese Weise ist auch bei schwacher Koppelung ein hoher Wirkungsgrad bei der Energieübertragung erreichbar.

Dem Regler wird die erfasste, am Glättungskondensator anliegende Spannung U_z als Istwert U_ist zugeführt und diese auf den Sollwert U_soll hin geregelt, indem die Pulsweite des Ansteuersignals für den Schalter S als Stellgröße vorgesehen ist.

Bei erreichter Sollspannung wird also der Schalter S nur sehr kurzzeitig oder gar nicht geöffnet.

Die Pulsweitenmodulationsfrequenz liegt vorzugsweise unterhalb der Frequenz des in den Primärleiter eingeprägten Stroms.

Vorzugsweise wird als Pulsweitenmodulationsfrequenz eine Frequenz zwischen 2 und 8 kHz verwendet, wodurch Schaltverluste gering haltbar sind. Als Schalter S wird vorzugsweise ein IGBT oder MOSFET verwendet. Die Erfindung ist mit hohem Wirkungsgrad ausführbar bei maximal zulässigen Verbraucherleistungen von mehr als 500 Watt oder sogar mehr 1 kW bis 10kW. Aber auch bei größeren Leistungen ist sie verteilhaft mit hohem Wirkungsgrad einsetzbar.

Bei weiteren erfindungsgemäßen Ausführungsbeispielen liegt die Pulsweitenmodulationsfrequenz vorzugsweise oberhalb der Frequenz des in den Primärleiter eingeprägten Stroms oder gleicht derselben.

Bei weiteren erfindungsgemäßen Ausführungsbeispielen ist die Pulsweitenmodulationsfrequenz synchronisiert auf die Frequenz des in den Primärleiter eingeprägten Stroms.

## Patentansprüche

1. System zur berührungslosen Energieübertragung von einem ersten Bereich des Systems an einen anderen Teil des Systems, insbesondere bewegbar angeordneten Teil des Systems,
wobei ein stationär verlegter Primärleiter vorgesehen ist, an den eine oder mehrere vom anderen Teil umfasste Sekundärwicklungen induktiv gekoppelt vorgesehen ist, wobei die Sekundärwicklungen mit einem oder mehreren Kondensatoren derart in Reihe geschaltet sind, dass **eine reine Serienschaltung von reinen Serienschwingkreisen gebildet ist und** die Resonanzfrequenz des so gebildeten Serienschwingkreises im Wesentlichen der Frequenz eines in den Primärleiter eingeprägten Wechselstromes gleichen,
wobei die am Serienschwingkreis auftretende Spannung einem Gleichrichter zugeführt wird, an dessen Ausgangsseite **ein betätigbarer Schalter, der als gleichrichterausgangsseltlg betätigbarer Kurzschließen angeordnet Ist, vorgesehen ist, also zum direkten Kurzschließen des Ausgangs des Gleichrichters,**
wobei der nicht durch den Schalter abgeführte Strom über eine Freilaufdiode einem Glättungskondensator zugeführt wird,
wobei die am Glättungskondensator auftretende Spannung einem Verbraucher zur Verfügung gestellt wird.

2. System nach mindestens einem der vorangegangenen Ansprüche, wobei ein Mittel zur Erfassung der am Glättungskondensator auftretenden Spannung vorgesehen sind, wobei das Mittel mit einem Regler verbunden ist, der als Stellgröße das Ansteuersignal des Schalters erzeugt.

3. System nach mindestens einem der vorangegangenen Ansprüche, wobei das Ansteuersignal ein pulsweitenmodullertes Signal vorgesehen ist und/oder der Schalter pulsweitenmoduliert betätigbar ist.

4. System nach mindestens einem der vorangegangenen Ansprüche, wobei dem Regler eine Sollspannung zugeführt wird oder in ihm hinterlegt ist.

5. System nach mindestens einem der vorangegangenen Ansprüche, wobei die Pulsweitenmodulationsfrequenz kleiner ist als die Frequenz des in den Primärleiter eingeprägten Stromes.

6. System nach mindestens einem der vorangegangenen Ansprüche, wobei die Pulsweitenmodulationsfrequenz synchronisiert ist auf die Frequenz des in den Primärleiter eingeprägten Stromes.

7. System nach mindestens einem der vorangegangenen Ansprüche, wobei die Sekundärwicklungen um einen gemeinsamen Kern gewickelt und/oder geführt sind.

8. System nach mindestens einem der vorangegangenen Ansprüche, wobei der Schalter ein elektronischer Halbleiterschalter, insbesondere Transistor, ist, wie IGBT oder MOSFET.

9. System nach mindestens einem der vorangegangenen Ansprüche, wobei die Sekundärwicklungen und die Kondensatoren von einem gemeinsamen Gehäuse umgeben sind.

10. Verfahren zum Betrieben eines Systems zur berührungslosen Energieübertragung an einen Teil des Systems, insbesondere bewegbar angeordneten Teil des Systems,
wobei ein stationär verlegter Primärleiter vorgesehen ist, an den eine oder mehrere vom Teil umfasste Sekundärwicklungen induktiv gekoppelt vorgesehen ist, wobei die Sekundärwicklungen mit einem oder mehreren Kondensatoren derart in Reihe geschaltet sind, dass **eine reine Serienschaltung von relnen Serienschwingkreisen gebildet ist und** die Resonanzfrequenz des so gebildeten Serienschwingkreises im Wesentlichen der Frequenz eines in den Primärleiter eingeprägten Wechselstromes gleichen,
wobei die am Serienschwingkreis auftretendes Spannung einem Gleichrichter zugeführt wird, an dessen Ausgangsseite ein als Kurzschließer betätigbarer Schalter vorgesehen ist, wobei also mit dem **ein direktes Kurzschließen des Ausgangs des Gleichrichters ausgeführt wird,**
**wobei** der Schalter pulsweitenmoduliert angesteuert wird,
wobei der nicht durch den Schalter abgeführte Strom über eine Freilaufdiode einem Glättungskondensator zugeführt wird,
wobei die am Glättungskondensator auftretende Spannung einem Verbraucher zur Verfügung gestellt wird.

11. Verfahren nach mindestens einem der vorangegangenen Ansprüche. wobei die am Glättungskondensator anliegende Spannung erfasst wird und als Istgröße auf eine Sollspannung hin geregelt wird, indem als Stellgröße die Pulsweite des Ansteuersignals für den Schalter verwendet wird.

12. Verfahren nach mindestens einem der vorangegangenen Ansprüche wobei die Pulsweitenmodulationsfrequenz synchronisiert zu der Frequenz des in den Primärleiter eingeprägten Stromes wird.

## Claims

1. System for contactless energy transmission from a first region of the system to another part of the system, in particular movably arranged part of the system,
wherein a stationarily laid primary conductor is provided, on which there is provided inductively coupled one or more secondary windings comprised by the other part,
wherein the secondary windings are connected in series with one or more capacitors such that a pure series connection of **pure** series resonant circuits is formed and the resonant frequency of the series resonant circuit thus formed is substantially equal to the frequency of an alternating current applied to the primary conductor,
wherein the voltage occurring at the series resonant circuit is supplied to a rectifier, on the output side of which there is provided an actuatable switch which is arranged as a short-circuiter actuatable on the rectifier output side, that is to say for **direct** short-circuiting of the output of the rectifier,
wherein the current not led away through the switch is supplied to a smoothing capacitor via a freewheeling diode,
wherein the voltage occurring at the smoothing capacitor is made available to a load.

2. System according to at least one of the preceding claims, wherein a means for detecting the voltage occurring at the smoothing capacitor is provided, wherein the means is connected to a controller which generates the control signal of the switch as control variable.

3. System according to at least one of the preceding claims, wherein the control signal is provided as a pulse-width-modulated signal and/or the switch is actuatable with pulse-width modulation.

4. System according to at least one of the preceding claims, wherein a desired voltage is supplied to the controller or is stored therein.

5. System according to at least one of the preceding claims, wherein the pulse-width modulation frequency is less than the frequency of the current applied to the primary conductor.

6. System according to at least one of the preceding claims, wherein the pulse-width modulation frequency is synchronised to the frequency of the current applied to the primary conductor.

7. System according to at least one of the preceding claims, wherein the secondary windings are wound and/or led around a common core.

8. System according to at least one of the preceding claims, wherein the switch is an electronic semiconductor switch, in particular transistor, such as IGBT or MOSFET.

9. System according to at least one of the preceding claims, wherein the secondary windings and the capacitors are surrounded by a common housing.

10. Method for operating a system for contactless energy transmission to a part of the system, in particular movably arranged part of the system,
wherein a stationarily laid primary conductor is provided, on which there is provided inductively coupled one or more secondary windings comprised by the part,
wherein the secondary windings are connected in series with one or more capacitors such that a pure series connection of **pure** series resonant circuits is formed and the resonant frequency of the series resonant circuit thus formed is substantially equal to the frequency of an alternating current applied to the primary conductor,
wherein the voltage occurring at the series resonant circuit is supplied to a rectifier, on the output side of which there is provided a switch actuatable as a short-circuiter, that is to say with which a **direct** short-circuiting of the output of the rectifier is carried out,
wherein the switch is controlled with pulse-width modulation,
wherein the current not led away through the switch is supplied to a smoothing capacitor via a freewheeling diode,
wherein the voltage occurring at the smoothing capacitor is made available to a load.

11. Method according to at least one of the preceding claims, wherein the voltage applied to the smoothing capacitor is detected and adjusted as instantaneous variable to a target voltage by using as control variable the pulse width of the control signal for the switch.

12. Method according to at least one of the preceding claims, wherein the pulse-width modulation frequency is synchronised to the frequency of the current applied to the primary conductor.

## Revendications

1. Système de transmission d'énergie sans contact d'une première partie du système à une autre partie du système, en particulier une partie mobile du système,
dans lequel un conducteur primaire posé de façon stationnaire est prévu, auquel un ou plusieurs enroulements secondaires appartenant à l'autre partie sont couplés par induction,
les enroulements secondaires étant connectés en série à un ou plusieurs condensateurs de telle façon qu'un couplage en série pur de circuits oscillants série purs soit formé et que la fréquence de résonance du circuit oscillant série ainsi formé soit sensiblement égale à la fréquence d'un courant alternatif appliqué dans le conducteur primaire,
la tension apparaissant au circuit oscillant série étant amenée à un redresseur du côté sortie duquel est prévu un commutateur actionnable qui est disposé sous la forme d'un court-circuiteur actionnable côté sortie du redresseur, donc pour le court-circuitage direct de la sortie du redresseur,
le courant non détourné par le commutateur étant amené à un condensateur de lissage via une diode de roue libre,
la tension apparaissant au condensateur de lissage étant mise à la disposition d'un consommateur.

2. Système selon au moins l'une des revendications précédentes,
dans lequel un moyen de détection de la tension apparaissant au condensateur de lissage est prévu, le moyen étant relié à un régulateur qui produit le signal de commande du commutateur en tant que grandeur réglante.

3. Système selon au moins l'une des revendications précédentes,
dans lequel le signal de commande est un signal modulé en largeur d'impulsion et/ou le commutateur est actionnable de façon modulée en largeur d'impulsion.

4. Système selon au moins l'une des revendications précédentes,
dans lequel une tension de consigne est amenée au régulateur ou enregistrée dans celui-ci.

5. Système selon au moins l'une des revendications précédentes,
dans lequel la fréquence de modulation de largeur d'impulsion est inférieure à la fréquence du courant appliqué dans le conducteur primaire.

6. Système selon au moins l'une des revendications précédentes,
dans lequel la fréquence de modulation de largeur d'impulsion est synchronisée sur la fréquence du courant appliqué dans le conducteur primaire.

7. Système selon au moins l'une des revendications précédentes,
dans lequel les enroulements secondaires sont enroulés et/ou guidés autour d'un noyau commun.

8. Système selon au moins l'une des revendications précédentes,
dans lequel le commutateur est un commutateur électronique à semi-conducteurs, en particulier un transistor, comme un IGBT ou un MOSFET.

9. Système selon au moins l'une des revendications précédentes,
dans lequel les enroulements secondaires et les condensateurs sont entourés par un boîtier commun.

10. Procédé de fonctionnement d'un système de transmission d'énergie sans contact à une partie du système, en particulier une partie mobile du système,
dans lequel un conducteur primaire posé de façon stationnaire est prévu, auquel un ou plusieurs enroulements secondaires appartenant à ladite partie sont couplés par induction,
les enroulements secondaires étant connectés en série à un ou plusieurs condensateurs de telle façon qu'un couplage en série pur de circuits oscillants série purs soit formé et que la fréquence de résonance du circuit oscillant série ainsi formé soit sensiblement égale à la fréquence d'un courant alternatif appliqué dans le conducteur primaire,
la tension apparaissant au circuit oscillant série étant amenée à un redresseur du côté sortie duquel est prévu un commutateur actionnable sous la forme d'un court-circuiteur, avec lequel un court-circuitage direct de la sortie du redresseur est effectué,
le commutateur étant commandé par modulation de largeur d'impulsion,
le courant non détourné par le commutateur étant amené à un condensateur de lissage via une diode de roue libre,
la tension apparaissant au condensateur de lissage étant mise à la disposition d'un consommateur.

11. Procédé selon au moins l'une des revendications précédentes,
selon lequel la tension appliquée au condensateur de lissage est détectée et régulée en tant que grandeur réelle sur une tension de consigne en utilisant comme grandeur réglante la largeur d'impulsion du signal de commande pour le commutateur.

12. Procédé selon au moins l'une des revendications précédentes,
selon lequel la fréquence de modulation de largeur d'impulsion est synchronisée sur la fréquence du courant appliqué dans le conducteur primaire.
